# EUROPEAN PATENT SPECIFICATION

(11) **EP 3 835 682 B1**
(45) Date of publication and mention of the grant of the patent: **13.04.2022**
(21) Application number: 19846157.6
(22) Date of filing: 26.07.2019
(51) Int. Cl.: F24S 10/70, F24S 70/12, F24S 70/225

(54) **SOLAR-HEAT-COLLECTING PIPE**
SOLARWÄRMESAMMELROHR
TUYAU DE COLLECTE DE CHALEUR SOLAIRE

(30) Priority: 09.08.2018 JP 2018150307
(43) Date of publication of application: 16.06.2021
(73) Proprietor: Kabushiki Kaisha Toyota Jidoshokki, Kariya-shi, Aichi 448-8671 (JP); Japan Fine Ceramics Center, Nagoya-shi, Aichi 456-8587 (JP)
(72) Inventor: TSUTSUI, Takuhito, Kariya-shi, Aichi 448-8671 (JP); NORITAKE, Kazuto, Kariya-shi, Aichi 448-8671 (JP); OKUHARA, Yoshiki, Nagoya-shi, Aichi 456-8587 (JP); KUROYAMA, Tomohiro, Nagoya-shi, Aichi 456-8587 (JP); IGIMI, Daisuke, Nagoya-shi, Aichi 456-8587 (JP)
(74) Representative: TBK
(86) International application number: PCT/JP2019/029411
(87) International publication number: WO 2020/031749

(56) References cited:
- EP-A1- 2 801 767
- EP-A1- 2 930 446
- WO-A1-2011/078024
- WO-A1-2017/130536
- WO-A1-2017/130536
- US-A1- 2018 076 342

## Description

### Technical Field

This invention relates to a solar heat-collecting pipe.

### Background Art

Solar heat power generation devices, in which sunlight is converted into heat and the heat is used to generate power, are known. In such devices, sunlight is focused by focusing means, a heat transfer medium in a solar heat-collecting pipe is heated by the focused sunlight, and power is generated by a power generator by using thermal energy of the heated heat transfer medium. Therefore, a solar heat-collecting pipe, in which a variety of layers for efficiently converting sunlight into heat are formed on the outside surface of a pipe through the interior of which a heat transfer medium is allowed to flow, is used in such devices. For example, an infrared radiation-reflecting layer for reflecting radiated heat from a heat transfer medium and a pipe, a sunlight-to-heat conversion layer for converting sunlight into heat and an anti-reflection for preventing reflection of sunlight are formed on the outside surface of a pipe through the interior of which a heat transfer medium is allowed to flow.

Use of stainless steel is known as a material for pipes through the interior of which a heat transfer medium is allowed to flow in this type of solar heat-collecting pipe (for example, see Patent Document 1).

Patent Document 2 discloses a solar heat collection tube in which at least an infrared reflective layer, a solar-thermal conversion layer, and an antireflection layer are provided on the exterior surface of a tube through which a heat medium can circulate internally.

Patent Document 3 addresses the issue of providing an optical selective film that contributes to efficiently converting light into heat.

### Citation List

### Patent Literature

[Patent Document 1] Japanese Patent Application Publication No. 2015-166637
[Patent Document 2] WO 2017/130536 A1
[Patent Document 3] EP 2 930 446 A1

### Summary of Invention

### Technical Problem

If a heat transfer medium flowing through the interior of a solar heat-collecting pipe increases in temperature, the pipe through which the heat transfer medium flows and the outside surface of the pipe are exposed to the high temperature and reach a high temperature of approximately 550°C to approximately 700°C.

In cases where the material of the pipe is silicon, there was no adverse effect on the stability of the sunlight-to-heat conversion layer even if the pipe was heated to a temperature of 750°C, but in cases where the solar heat-collecting pipe was produced using a ferrous material pipe such as stainless steel, it is understood that there was an adverse effect on the high temperature stability of the sunlight-to-heat conversion layer.

In addition, even if a diffusion-preventing layer a metal nitride is provided between the sunlight-to-heat conversion layer and the ferrous material pipe in order to improve the thermal stability of the sunlight-to-heat conversion layer, sufficient high temperature stability cannot be achieved, and even if a diffusion-preventing layer containing an oxide is provided between the sunlight-to-heat conversion layer and the ferrous material pipe, sufficient high temperature stability cannot be achieved.

Therefore, this invention relates to a solar heat-collecting pipe obtained using a ferrous material pipe, and is aimed at providing a solar heat-collecting pipe that exhibits a sunlight-to-heat conversion layer with excellent stability even if exposed to high temperatures.

### Means for Solving the Problem

As a result of diligent research carried out in view of the circumstances mentioned above, the inventors of this invention found that by providing both a first diffusion-preventing layer formed from a specific oxide and a second diffusion-preventing layer formed from a specific metal nitride between a sunlight-to-heat conversion layer and a ferrous material pipe through which a heat transfer medium flows, it is possible to ensure high temperature stability of the sunlight-to-heat conversion layer, to thereby complete this invention.

### Advantageous Effects of the Invention

By providing a first diffusion-preventing layer formed from a specific oxide and a second diffusion-preventing layer formed from a specific metal nitride between a sunlight-to-heat conversion layer and a ferrous material pipe through which a heat transfer medium flows in a solar heat-collecting pipe, it is possible to ensure stability of the sunlight-to-heat conversion layer at high temperatures and also impart the solar heat-collecting pipe with excellent durability.

### Brief Description of the Drawings

Fig. 1 is a partial cross-sectional view of the solar heat-collecting pipe of Reference Embodiment 1, not part of the present invention.
Fig. 2 is a partial cross-sectional view of the solar heat-collecting pipe of Reference Embodiment 2, not part of the present invention.
Fig. 3 is a partial cross-sectional view of the solar heat-collecting pipe of Embodiment 1.
Fig. 4 is a partial cross-sectional view of the solar heat-collecting pipe of Reference Embodiment 3, not part of the present invention.
Fig. 5 is a partial cross-sectional view of the solar heat-collecting pipe of Reference Embodiment 4, not part of the present invention.

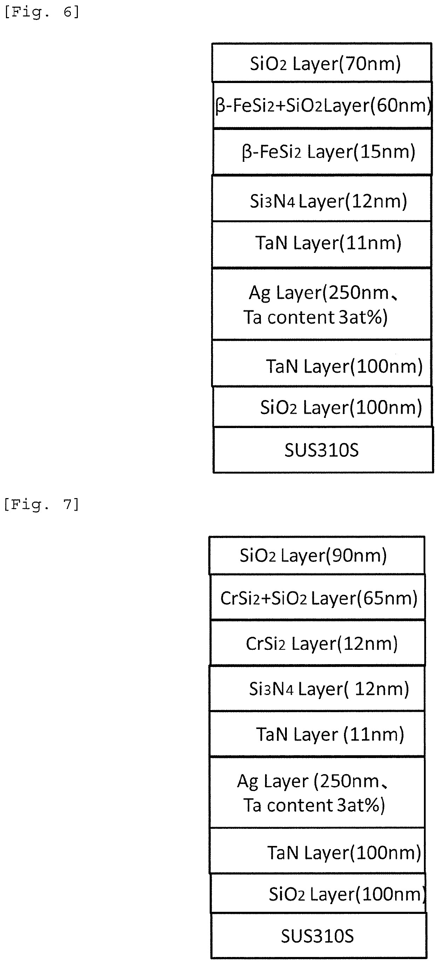

Fig. 6 shows a layered product, not part of the present invention, obtained by layering a first diffusion-preventing layer 3 (a SiO₂ layer having a thickness of 100 nm), a second diffusion-preventing layer 4 (a TaN layer having a thickness of 100 nm), an infrared radiation-reflecting layer 5 in which 3 at% of Ta is dispersed (an Ag layer having a thickness of 250 nm), a metal protection layer 11 (a TaN layer having a thickness of 11 nm), an oxygen barrier layer 12 (a Si₃N₄ layer having a thickness of 12 nm), a first sunlight-to-heat conversion layer 13 (a β-FeSi₂ layer having a thickness of 15 nm), a second sunlight-to-heat conversion layer 14 (a β-FeSi₂+SiO₂ layer having a thickness of 60 nm) and an anti-reflection layer 8 (a SiO₂ layer having a thickness of 70 nm) in that order on SUS 310S.
Fig. 7 shows a layered product, not part of the present invention, obtained by layering a first diffusion-preventing layer 3 (a SiO₂ layer having a thickness of 100 nm), a second diffusion-preventing layer 4 (a TaN layer having a thickness of 100 nm), an infrared radiation-reflecting layer 5 in which 3 at% of Ta is dispersed (an Ag layer having a thickness of 250 nm), a metal protection layer 11 (a TaN layer having a thickness of 11 nm), an oxygen barrier layer 12 (a Si₃N₄ layer having a thickness of 12 nm), a first sunlight-to-heat conversion layer 13 (a CrSi₂ layer having a thickness of 12 nm), a second sunlight-to-heat conversion layer 14 (a CrSi₂+SiO₂ layer having a thickness of 65 nm) and an anti-reflection layer 8 (a SiO₂ layer having a thickness of 90 nm) in that order on SUS 310S.
Fig. 8 is a partial cross-sectional view of the solar heat-collecting pipe of Embodiment 2.
Fig. 9 is a partial cross-sectional view of the solar heat-collecting pipe of Embodiment 3.
Fig. 10 is a diagram that shows the configuration of a layered product used as a sample in Test Example 1.
Fig. 11 is an X-Ray diffraction chart of layered products heated at 750°C for 1 hour, 11 hours, 21 hours, 31 hours, 41 hours, and 51 hours in Test Example 1.
Fig. 12 is a diagram that shows the configuration of a layered product used as a sample in Test Example 2.
Fig. 13 is an X-Ray diffraction chart of a layered product heated at 750°C for 1 hour in Test Example 2.
Fig. 14 is a diagram that shows the configuration of a layered product used as a sample in Test Example 3.
Fig. 15 is an X-Ray diffraction chart of layered products heated at 750°C for 1 hour and 11 hours in Test Example 3.
Fig. 16 is a diagram that shows the configuration of a layered product used as a sample in Test Example 4.
Fig. 17 is an X-Ray diffraction chart of layered products heated at 750°C for 1 hour, 11 hours, 21 hours, 31 hours, 41 hours, and 51 hours in Test Example 4.
Fig. 18 is a diagram that shows the configuration of a layered product used as a sample in Test Example 5.
Fig. 19 is an X-Ray diffraction chart of layered products heated at 750°C for 1 hour, 11 hours, 21 hours, 31 hours, 41 hours, 51 hours, 61 hours, 71 hours, and 81 hours in Test Example 5.
Fig. 20 is a diagram that shows the configuration of a layered product used as a sample in Test Example 6.
Fig. 21 is an X-Ray diffraction chart of a layered product heated at 700°C for 1 hour in Test Example 6.
Fig. 22 is a diagram that shows the configuration of a layered product used as a sample in Test Example 7.
Fig. 23 is an X-Ray diffraction chart of a layered product heated at 700°C for 1 hour and layered products heated at 750°C for 1 hour, 30 hours and 50 hours in Test Example 7.
Fig. 24 is a diagram that shows the configuration of a layered product used as a sample in Test Example 8.
Fig. 25 is an X-Ray diffraction chart of a layered product heated at 700°C for 1 hour and layered products heated at 750°C for 1 hour, 30 hours, and 50 hours in Test Example 8.
Fig. 26 is a diagram that shows the configuration of a layered product used as a sample in Test Example 9.
Fig. 27 is an X-Ray diffraction chart of layered products heated at 750°C for 1 hour, 30 hours, and 50 hours in Test Example 9.

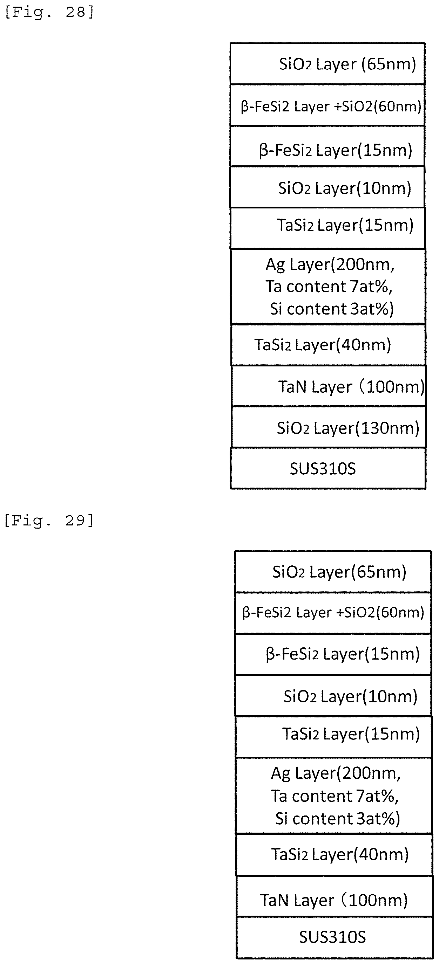

Fig. 28 shows a layered product of Example 1, which is obtained by layering a SiO₂ layer (having a thickness of 130 nm), a TaN layer (having a thickness of 100 nm), a TaSi₂ layer (having a thickness of 40 nm), an Ag layer containing Ta and S (having a thickness of 200 nm and containing 7 at% of Ta and 3 at% of Si), a TaSi₂ layer (having a thickness of 15 nm), a SiO₂ layer (having a thickness of 10 nm), a β-FeSi₂ layer (having a thickness of 15 nm), a β-FeSi₂ layer containing SiO₂ (having a thickness of 60 nm and containing 60 vol% of SiO₂) and a SiO₂ layer (having a thickness of 65 nm) in that order on SUS 310S.
Fig. 29 shows a layered product of Comparative Example 1, which is obtained by layering a TaN layer (having a thickness of 100 nm), a TaSi₂ layer (having a thickness of 40 nm), an Ag layer containing Ta and Si (having a thickness of 200 nm and containing 7 at% of Ta and 3 at% of Si), a TaSi₂ layer (having a thickness of 15 nm), a SiO₂ layer (having a thickness of 10 nm), a β-FeSi₂ layer (having a thickness of 15 nm), a β-FeSi₂ layer containing SiO₂ (having a thickness of 60 nm and containing 60 vol% of SiO₂) and a SiO₂ layer (having a thickness of 65 nm) in that order on SUS 310S.
Fig. 30 shows results obtained by measuring reflection characteristics after heating the layered product of Example 1 at 750°C for 1 hour, 21 hours, 41 hours, 61 hours, 81 hours, 101 hours, 121 hours, 141 hours, 161 hours, and 201 hours.
Fig. 31 shows results obtained by measuring reflection characteristics after heating the layered product of Comparative Example 1 at 750°C for 1 hour, 11 hours, 21 hours, and 31 hours.
Fig. 32 is an X-Ray diffraction chart of Example 1 heated at 750°C for 1 hour, 21 hours, 41 hours, 61 hours, 81 hours, 101 hours, 121 hours, 141 hours, 161 hours, and 201 hours.
Fig. 33 is an X-Ray diffraction chart of Comparative Example 1 heated at 750°C for 1 hour, 11 hours and 31 hours. Description of the Embodiments

Reference Embodiments as well as preferred embodiments of the solar heat-collecting pipe of this invention will now be explained using the drawings.

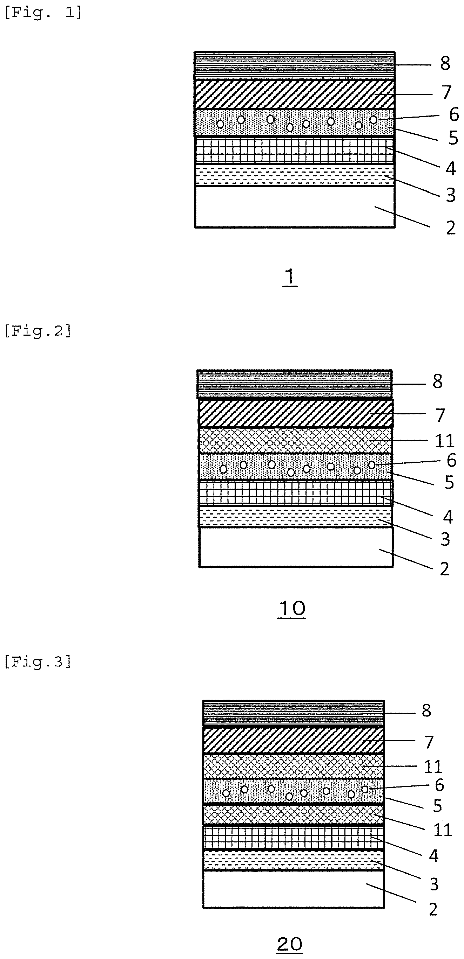

Fig. 1 is a partial cross-sectional view of the solar heat-collecting pipe of Reference Embodiment 1, not part of the present invention.

In Fig. 1, the solar heat-collecting pipe 1 of this reference embodiment has a ferrous material pipe 2 (hereinafter also referred to as "pipe 2") through the interior of which a heat transfer medium is allowed to flow, a first diffusion-preventing layer 3 formed on the outside surface of the pipe 2, a second diffusion-preventing layer 4 formed on the first diffusion-preventing layer 3, an infrared radiation-reflecting layer 5 formed on the second diffusion-preventing layer 4, a metal 6 dispersed in the infrared radiation-reflecting layer, a sunlight-to-heat conversion layer 7 formed on the infrared radiation-reflecting layer 5, and an anti-reflection layer 8 formed on the sunlight-to-heat conversion layer 7.

The ferrous material pipe 2 through the interior of which a heat transfer medium is allowed to flow is not particularly limited, and it is possible to use any material that is known in this technical field. For example, stainless steel, heat-resistant steel, alloy steel, or carbon steel can generally be used as the ferrous material. Of these, a pipe 2 made of stainless steel or heat-resistant steel is preferred in consideration of the perspective of usage environment (for example, a heating temperature for a pipe 2), and a pipe 2 made of austenitic stainless steel is more preferred.

In this reference embodiment, not part of the present invention, it is possible to use a known austenitic stainless steel, examples of which include SUS 310S, SUS 316L, SUS 321 and SUS 347.

The heat transfer medium that flows through the interior of the pipe 2 is not particularly limited, and it is possible to use any medium that is known in this technical field. Examples of the heat transfer medium include water, oils, carbon dioxide, and molten salts (for example, molten sodium).

The first diffusion-preventing layer 3 and the second diffusion-preventing layer 4, which are provided between the pipe 2 and the infrared radiation-reflecting layer 5, are provided in order to prevent Fe, Cr, and Ni contained in the ferrous material that is the material for forming the pipe 2 from thermally diffusing into the sunlight-to-heat conversion layer 7 under high temperature conditions of approximately 550°C to approximately 700°C.

The first diffusion-preventing layer 3 contains at least one oxide selected from the group consisting of silicon oxide (SiO₂), aluminum oxide (Al₂O₃) and chromium oxide (Cr₂O₃). The first diffusion-preventing layer 3 may contain compounds other than the oxides mentioned above, but the oxides mentioned above are preferably contained at a quantity of at least 80 at%, more preferably at least 90 at%, and most preferably 100 at%, that is, it is most preferable for the first diffusion-preventing layer 3 to consist of the oxides mentioned above.

The first diffusion-preventing layer 3 is provided in order to prevent atoms such as Fe, Ni, and Cr contained in the pipe 2 from thermally diffusing as far as the sunlight-to-heat conversion layer 7 under high temperature conditions. In addition, in cases where the nitride-containing second diffusion-preventing layer 4 was provided so as to be in contact with pipe 2 in a state whereby the first diffusion-preventing layer 3 was not present, nitrogen in the nitride reacted with components derived from the ferrous material of pipe 2 under high temperature conditions, and this layer could not achieve sufficient high temperature stability. That is, the first diffusion-preventing layer 3 also has the function of preventing a reaction between the pipe 2 and the second diffusion-preventing layer 4.

The thickness of the first diffusion-preventing layer 3 is not particularly limited as long as this thickness can prevent thermal diffusion of atoms such as Fe, Cr, and Ni in the pipe 2 and prevent a reaction between the pipe 2 and the second diffusion-preventing layer 4, but is generally 1 nm to 1000 nm, preferably 3 nm to 500 nm, and more preferably 5 to 200 nm.

The method for forming the first diffusion-preventing layer 3 is not particularly limited, and it is possible to use any method that is known in this technical field. For example, the first diffusion-preventing layer 3 can be formed using chemical vapor deposition or physical vapor deposition (sputtering, vacuum deposition, or ion plating). In the case of sputtering in particular, the first diffusion-preventing layer may be formed by using a metal or metalloid that is a constituent element of an oxide as a target and reacting the sputtered metal or metalloid with oxygen gas under conditions whereby oxygen gas is added to an inert gas such as argon gas.

The second diffusion-preventing layer 4 is provided in order to prevent atoms such as Fe, Cr, and Ni that constitute the pipe 2 from thermally diffusing as far as the sunlight-to-heat conversion layer 7 under high temperature conditions. Thermal diffusion of components of the pipe 2 cannot be adequately prevented by the first diffusion-preventing layer 3 in isolation, but by forming the second diffusion-preventing layer 4 on the outside surface of the first diffusion-preventing layer 3, it is possible to ensure high temperature stability of the sunlight-to-heat conversion layer 7 and prevent a deterioration in the performance thereof.

The second diffusion-preventing layer includes at least one nitride selected from the group consisting of tantalum nitride, tantalum oxynitride, titanium nitride, titanium oxynitride, niobium nitride and niobium oxynitride. The second diffusion-preventing layer 4 may contain compounds other than the nitrides mentioned above, but the nitrides mentioned above are preferably contained at a quantity of at least 80 at%, more preferably at least 90 at%, and most preferably 100 at%, that is, it is most preferable for the second diffusion-preventing layer 4 to consist of the nitrides mentioned above.

The thickness of the second diffusion-preventing layer 4 is not particularly limited as long as this thickness can prevent components of the pipe 2 from diffusing into the upper layers, but is generally 1 nm to 1000 nm, preferably 3 nm to 500 nm, and more preferably 5 nm to 200 nm.

The method for forming the second diffusion-preventing layer 4 is not particularly limited, and it is possible to use any method that is known in this technical field. For example, the second diffusion-preventing layer 4 can be formed using chemical vapor deposition or physical vapor deposition (sputtering, vacuum deposition, or ion plating). In the case of sputtering in particular, the second diffusion-preventing layer may be formed by preparing a target of tantalum, titanium, or niobium in a metallic state and reacting the sputtered metal with nitrogen gas under conditions whereby nitrogen gas is added to an inert gas such as argon gas. Here, the molar ratio of the inert gas to the nitrogen gas is not particularly limited, but is preferably between 6:4 and 8:2. On such occasion, an oxynitride may be formed instead of a nitride if a small amount of oxygen gas is mixed with the argon gas or nitrogen gas.

The infrared radiation-reflecting layer 5 formed on the outside surface of the second diffusion-preventing layer 4 has the function of reflecting radiated heat (thermal radiation) from the heat transfer medium and the pipe 2. Materials of the heat transfer medium, the pipe 2, and the like, used in the solar heat-collecting pipe 1 can be heated to a high temperature of approximately 550°C to approximately 700°C in some cases, but almost all electromagnetic waves emitted during this process are infrared radiation. Therefore, the infrared radiation-reflecting layer 5 has the primary function of reflecting this infrared radiation. That is, the infrared radiation-reflecting layer 5 prevents thermal energy applied to the heat transfer medium and the pipe 2 from being emitted to outside pipe 2 through heat radiation.

The infrared radiation-reflecting layer 5 in the solar heat-collecting pipe of this invention contains 90 at% or more of Ag. In certain embodiments, the infrared radiation-reflecting layer 5 can be a layer comprising Ag, but it is preferable to incorporate and disperse less than 10 at% of a metal 6 other than Ag in order to prevent aggregation and sublimation of Ag under high temperature conditions. Examples of the metal 6 that is dispersed in the Ag include Mo, W, Ta, Nb and Al. In addition, two or more of these metals may be used. By incorporating such metals in the infrared radiation-reflecting layer 5, it is possible to prevent aggregation and sublimation of Ag and prevent a deterioration in the function of the infrared radiation-reflecting layer 5. The metal 6 that is dispersed in the Ag is preferably Mo, W, Ta, or Nb, and more preferably Ta.

The amount of the metal 6 dispersed in the infrared radiation-reflecting layer 5 is not particularly limited, but is less than 10 at%, preferably 0.1 at% to 7 at%, more preferably 0.3 at% to 5 at%, and further preferably 0.5 at% to 3 at%.

Moreover, under high temperature conditions, the metal 6 (for example, Mo, W, Ta, Nb and Al) dispersed in the Ag can, in some cases, react with the metal protection layer described later. In order to prevent this, Si may be added to the infrared radiation-reflecting layer 5. By dispersing Si in the infrared radiation-reflecting layer 5, the dispersed metal forms a silicide under high temperature conditions and it is possible to prevent the metal from reacting with the metal protection layer.

In cases where Si is dispersed in the infrared radiation-reflecting layer 5, the amount thereof is not particularly limited, but is generally 0.1 at% to 7 at%, preferably 0.3 at% to 5 at%, and more preferably 0.5 at% to 3 at%.

The thickness of the infrared radiation-reflecting layer 5 is not particularly limited, but is preferably 10 nm to 500 nm, more preferably 30 nm to 400 nm, and further preferably 50 nm to 300 nm.

In cases where the infrared radiation-reflecting layer 5 consists of Ag, the infrared radiation-reflecting layer can be formed by using Ag as a target and carrying out sputtering in the presence of a gas containing argon gas. Sputtering conditions are not particularly limited and should be adjusted, as appropriate, according to the type of apparatus being used.

In cases where the infrared radiation-reflecting layer 5 is an Ag layer in which the metal 6 is dispersed, the Ag layer in which the metal 6 is dispersed can be formed by using Ag and the metal 6 (for example, at least one metal selected from the group consisting of Mo, W, Ta, Nb and Al) as a target and carrying out sputtering in the presence of an inert gas such as argon gas. Sputtering conditions are not particularly limited and should be adjusted, as appropriate, according to the type of apparatus being used. In addition, it is possible to use separate targets of Ag and the metal 6 or a single target that is a mixture of Ag and the metal 6.

In cases where the infrared radiation-reflecting layer 5 is an Ag layer in which silicon and the metal 6 are dispersed, the Ag layer 7 in which silicon and the metal 6 are dispersed can be formed by using Ag, silicon and the metal 6 (for example, at least one metal selected from the group consisting of Mo, W, Ta, Nb and Al) as a target and carrying out sputtering in the presence of an inert gas such as nitrogen gas or argon gas. Sputtering conditions are not particularly limited and should be adjusted, as appropriate, according to the type of apparatus being used. In addition, it is possible to use separate targets of Ag, silicon, and the metal 6 or a single target that is a mixture of Ag, silicon, and the metal 6.

The sunlight-to-heat conversion layer 7 formed on the infrared radiation-reflecting layer 5 has the function of efficiently absorbing sunlight while suppressing heat dissipation through heat radiation. The sunlight-to-heat conversion layer 7 is also known as a selective light absorption layer.

The sunlight-to-heat conversion layer 7 is not particularly limited, and it is possible to use any material that is known in this technical field. Examples of the sunlight-to-heat conversion layer 7 include a black chromium-plated layer, a black nickel-plated layer, an electroless blackened nickel layer, a magnetite coating layer, a cermet layer (a layer consisting of a material obtained by complexing a ceramic and a metal), an iron silicide layer, a manganese silicide layer, a chromium silicide layer, and a layer consisting of a composite material of a metal silicide, such as iron silicide, manganese silicide, or chromium silicide, and a transparent dielectric material (for example, SiO₂, Al₂O₃, AlN, or the like). In addition, these layers may be single layers or multiple layers comprising two or more layers.

In addition, it is preferable to use β-FeSi₂ or CrSi₂ as the sunlight-to-heat conversion layer 7 from the perspective of light absorption characteristics.

The thickness of the sunlight-to-heat conversion layer 7 is not particularly limited, but is preferably 1 nm to 100 nm, and more preferably 5 nm to 30 nm.

The method for forming the sunlight-to-heat conversion layer 7 is not particularly limited, and it is possible to use any method that is known in this technical field. For example, the sunlight-to-heat conversion layer can be formed using chemical vapor deposition, physical vapor deposition (sputtering, vacuum deposition, or ion plating), a plating method, or the like.

The anti-reflection layer 8 formed on the sunlight-to-heat conversion layer 7 has the function of preventing reflection of sunlight.

The anti-reflection layer 8 is not particularly limited, and it is possible to use any material that is known in this technical field. Examples of the anti-reflection layer 8 include transparent dielectric material layers such as a SiO₂ layer, an Al₂O₃ layer, an AlN layer and a Cr₂O₃ layer.

The thickness of the anti-reflection layer 8 is not particularly limited, but is preferably 10 nm to 500 nm.

The method for forming the anti-reflection layer 8 is not particularly limited, and it is possible to use any method that is known in this technical field. For example, the anti-reflection layer can be formed using chemical vapor deposition or physical vapor deposition (sputtering, vacuum deposition, or ion plating). In the case of sputtering in particular, the anti-reflection layer may be formed by using a metal or metalloid that is a constituent element of a transparent dielectric material as a target and reacting the sputtered metal or metalloid with oxygen gas or nitrogen gas under conditions whereby oxygen gas or nitrogen gas is added to an inert gas such as argon gas.

According to the solar heat-collecting pipe 1 of this Reference Embodiment 1, not part of the present invention, which has characteristics such as those described above, it is possible to prevent thermal diffusion of Fe, Cr, Ni, and the like, from the ferrous material pipe 2 by the first diffusion-preventing layer 3 and the second diffusion-preventing layer 4, and the sunlight-to-heat conversion layer 7 can function stably over a long period of time.

### Reference Embodiment 2

Fig. 2 is a partial cross-sectional view of the solar heat-collecting pipe of Reference Embodiment 2, not part of the present invention.

In Fig. 2, the solar heat-collecting pipe 10 of this reference embodiment, not part of the present invention, differs from the solar heat-collecting pipe 1 of Reference Embodiment 1 in that a metal protection layer 11 is provided between the infrared radiation-reflecting layer 5 and the sunlight-to-heat conversion layer 7. Moreover, because characteristics other than this are the same as those of the solar heat-collecting pipe 1 of Reference Embodiment 1, explanations will be omitted.

The metal protection layer 11 has the function of making Ag in the infrared radiation-reflecting layer 5 unlikely to sublime, meaning that the function of the infrared radiation-reflecting layer 5 is less likely to deteriorate.

The metal protection layer 11 is not particularly limited as long as this layer has the function of being able to prevent diffusion of Ag in the infrared radiation-reflecting layer 5, and is generally formed from a material having a higher melting point than Ag (961.8°C). Examples of materials having higher melting points than Ag include Nb (melting point 2469°C), Mo (melting point 2623°C), W (melting point 3422°C), Cu (melting point 1085°C), Ni (melting point 1455°C), Fe (melting point 1538°C), Cr (melting point 1907°C) and Ta (melting point 3020°C).

In addition, the metal protection layer 11 may be formed from a material that contains the metal 6 dispersed in the infrared radiation-reflecting layer 5 (for example, at least one metal selected from the group consisting of Mo, W, Ta, Nb and Al). A compound of silicon or nitrogen and at least one metal 6 selected from the group consisting of Mo, W, Ta, Nb and Al can be used as this type of material. Examples of such compounds include TaSi₂ (melting point 2200°C), MoSi₂ (melting point 2020°C), Mo₅Si₃ (melting point 2180°C), WSi₂ (melting point 2160°C), TaN (melting point 3083°C), NbSi₂ (melting point 1930°C) and NbN (melting point 2300°C).

The thickness of the metal protection layer 11 provided between the infrared radiation-reflecting layer 5 and the sunlight-to-heat conversion layer 7 is not particularly limited and should be specified, as appropriate, according to the type of material being used, but is preferably less than the thickness of the infrared radiation-reflecting layer 5 from the perspective of suppressing heat radiation.

In addition, by approximating a multilayer film using the optical constants of the materials used in the infrared radiation-reflecting layer 5 and the metal protection layer 11 and calculating the heat radiation on the basis of these results, it is possible to determine a suitable thickness for the metal protection layer 11 provided between the infrared radiation-reflecting layer 5 and the sunlight-to-heat conversion layer 7.

The method for forming the metal protection layer 11 is not particularly limited, and it is possible to use any method that is known in this technical field. For example, the metal protection layer can be formed using chemical vapor deposition or physical vapor deposition (sputtering, vacuum deposition, or ion plating).

According to the solar heat-collecting pipe 10 of this reference embodiment, not part of the present invention, which has characteristics such as those described above, it is possible to achieve not only the advantageous effect of the solar heat-collecting pipe 1 of Reference Embodiment 1, but by providing the metal protection layer 11 that prevents diffusion of Ag in the infrared radiation-reflecting layer 5, it is possible to suppress aggregation and sublimation of Ag and the efficiency of conversion of sunlight to heat is less likely to deteriorate.

### Embodiment 1

Fig. 3 is a partial cross-sectional view of the solar heat-collecting pipe of this embodiment.

In Fig. 3, a solar heat-collecting pipe 20 of this embodiment differs from the solar heat-collecting pipe 10 of Reference Embodiment 2 in that a metal protection layer 11 is provided between the infrared radiation-reflecting layer 5 and the second diffusion-preventing layer 4, that is, the infrared radiation-reflecting layer 5 is sandwiched between metal protection layers 11. Moreover, because characteristics other than this are the same as those of the solar heat-collecting pipe 10 of Reference Embodiment 2, explanations will be omitted.

The metal protection layer 11 provided between the infrared radiation-reflecting layer 5 and the second diffusion-preventing layer 4 also has the function of making Ag in the infrared radiation-reflecting layer 5 less likely to sublime, meaning that the function of the infrared radiation-reflecting layer 5 is less likely to deteriorate. In addition, the metal protection layer 11 provided between the infrared radiation-reflecting layer 5 and the second diffusion-preventing layer 4 also has the function of acting as a foundation for the infrared radiation-reflecting layer 5, makes the infrared radiation-reflecting layer 5uniformly formed thereon, and can stabilize the function of the infrared radiation-reflecting layer 5.

The material of the metal protection layer 11 provided between the infrared radiation-reflecting layer 5 and the second diffusion-preventing layer 4 can be the same as the material of the metal protection layer 11 provided between the infrared radiation-reflecting layer 5 and the sunlight-to-heat conversion layer 7, examples of which are listed in Reference Embodiment 2 above. The material of the metal protection layer 11 provided between the infrared radiation-reflecting layer 5 and the second diffusion-preventing layer 4 may be the same as, or different from, the material of the metal protection layer 11 provided between the infrared radiation-reflecting layer 5 and the sunlight-to-heat conversion layer 7, but it is preferable for both metal protection layers to be formed from the same material from the perspective of production efficiency.

The thickness of the metal protection layer 11 provided between the infrared radiation-reflecting layer 5 and the second diffusion-preventing layer 4 is not particularly limited and should be specified, as appropriate, according to the type of material being used, but is generally 1 nm to 500 nm, preferably 3 nm to 200 nm, and more preferably 5 nm to 100 nm.

The method for forming the metal protection layer 11 that is provided between the infrared radiation-reflecting layer 5 and the second diffusion-preventing layer 4 is not particularly limited, and it is possible to use any method that is known in this technical field. For example, the metal protection layer can be formed using chemical vapor deposition or physical vapor deposition (sputtering, vacuum deposition, or ion plating).

According to the solar heat-collecting pipe 20 of this embodiment, which has characteristics such as those described above, it is possible to achieve not only the advantageous effects of the solar heat-collecting pipe 1 of Reference Embodiment 1 and the solar heat-collecting pipe 10 of Reference Embodiment 2, but it is also possible to more stably achieve the function of the infrared radiation-reflecting layer 5.

### Reference Embodiment 3

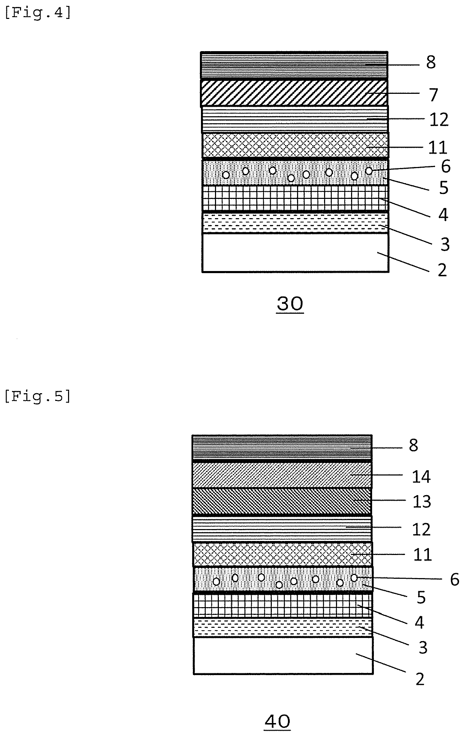

Fig. 4 is a partial cross-sectional view of the solar heat-collecting pipe of Reference Embodiment 3, not part of the present invention.

In Fig. 4, a solar heat-collecting pipe 30 of this reference embodiment, not part of the present invention, differs from the solar heat-collecting pipe 10 of Reference Embodiment 2 in that an oxygen barrier layer 12 is provided between the metal protection layer 11 and the sunlight-to-heat conversion layer 7. Moreover, because characteristics other than this are the same as those of the solar heat-collecting pipe 10 of Reference Embodiment 2, explanations will be omitted. In addition, characteristics of this reference embodiment, not part of the present invention, can also be applied to the solar heat-collecting pipe 20 of Embodiment 1.

The oxygen barrier layer 12 is provided in order to prevent permeation of oxygen, which is a cause of oxidation of the metal protection layer 11. Therefore, by forming the oxygen barrier layer 12 between the metal protection layer 11 and the sunlight-to-heat conversion layer 7, it is possible to prevent oxidation of the metal protection layer 11, meaning that the function of the metal protection layer 11 is less likely to deteriorate.

The oxygen barrier layer 12 is not particularly limited as long as this layer ensures that oxygen is less likely to permeate, and it is possible to use, for example, a dielectric material layer. Examples of the dielectric material layer include transparent dielectric material layers such as a SiO₂ layer, an Al₂O₃ layer, an AlN layer, a Cr₂O₃ and a Si₃N₄ layer.

The thickness of the oxygen barrier layer 12 is not particularly limited as long as oxygen cannot permeate, but is generally 1 nm to 100 nm, preferably 3 nm to 50 nm, and more preferably 5 nm to 30 nm.

The method for forming the oxygen barrier layer 12 is not particularly limited, and it is possible to use any method that is known in this technical field. For example, the oxygen barrier layer can be formed using chemical vapor deposition or physical vapor deposition (sputtering, vacuum deposition, or ion plating). In the case of sputtering in particular, the oxygen barrier layer may be formed by using a metal or metalloid that is a constituent element of a transparent dielectric material as a target and reacting the sputtered metal or metalloid with oxygen gas or nitrogen gas under conditions whereby oxygen gas or nitrogen gas is added to an inert gas such as argon gas.

According to the solar heat-collecting pipe 30 of this reference embodiment, not part of the present invention, which has characteristics such as those described above, it is possible to achieve not only the advantageous effect of the solar heat-collecting pipe 10 of Reference Embodiment 2, but it is also possible to prevent a deterioration in the function of the metal protection layer 11.

### Reference Embodiment 4

Fig. 5 is a partial cross-sectional view of the solar heat-collecting pipe of Reference Embodiment 4, not part of the present invention.

In Fig. 5, a solar heat-collecting pipe 40 of this reference embodiment, not part of the present invention, differs from the solar heat-collecting pipe 30 of Reference Embodiment 3 in that the sunlight-to-heat conversion layer has a two-layer structure comprising a first sunlight-to-heat conversion layer 13 and a second sunlight-to-heat conversion layer 14. Moreover, because characteristics other than this are the same as those of the solar heat-collecting pipe 30 of Reference Embodiment 3, explanations will be omitted. In addition, characteristics of this reference embodiment, not part of the present invention, can also be applied to the solar heat-collecting pipe 1 of Reference Embodiment 1, the solar heat-collecting pipe 10 of Reference Embodiment 2 and the solar heat-collecting pipe 20 of Embodiment 1.

By providing the second sunlight-to-heat conversion layer 14 between the anti-reflection layer 8 and the first sunlight-to-heat conversion layer 13, it is possible to reduce the difference in refractive index between the anti-reflection layer and the sunlight-to-heat conversion layers, and sunlight can be efficiently absorbed and converted to heat.

For example, because there is a large difference in refractive index between the sunlight-to-heat conversion layer and the anti-reflection layer in a case where a layer consisting of at least one silicide selected from the group consisting of iron silicide, manganese silicide and chromium silicide is used as the sunlight-to-heat conversion layer, by providing a layer consisting of a composite material containing such a silicide and an inorganic material between the anti-reflection layer and the sunlight-to-heat conversion layer, the difference in refractive index between these layers is reduced and sunlight can be efficiently absorbed.

The first sunlight-to-heat conversion layer 13 is a layer that contains at least 80 at%, preferably at least 90 at%, and more preferably at least 95 at%, of one silicide selected from the group consisting of iron silicide, manganese silicide and chromium silicide. In addition, the first sunlight-to-heat conversion layer 13 may be a layer consisting of a silicide mentioned above. β-FeSi₂ or CrSi₂ is preferred as the silicide mentioned above from the perspective of light absorption characteristics. Materials contained in the first sunlight-to-heat conversion layer 13 other than the silicide mentioned above are not particularly limited, and examples thereof include silicon and silicon oxide.

The thickness of the first sunlight-to-heat conversion layer 13 is not particularly limited, but is preferably 1 nm to 100 nm, and more preferably 5 nm to 30 nm.

The method for forming the first sunlight-to-heat conversion layer 13 is not particularly limited, and it is possible to use any method that is known in this technical field. For example, the first sunlight-to-heat conversion layer can be formed using chemical vapor deposition, physical vapor deposition (sputtering, vacuum deposition, or ion plating), a plating method, or the like.

The second sunlight-to-heat conversion layer 14 is formed between the first sunlight-to-heat conversion layer 13 and the anti-reflection layer 8. The second sunlight-to-heat conversion layer 14 consists of a composite material that comprises at least one silicide selected from the group consisting of iron silicide, manganese silicide and chromium silicide; and at least one inorganic material. β-FeSi₂ and CrSi₂ are preferably selected as the silicide mentioned above from the perspective of light absorption characteristics.

Oxides, nitrides, carbides, oxynitrides, oxycarbides and oxycarbonitrides of metals and metalloids can be used as the inorganic material. SiO₂, Al₂O₃, AlN, Cr₂O₃, or the like, which can be used when forming the anti-reflection layer 8, can be advantageously used.

The content of the inorganic material in the composite material is generally 40 vol% to 80 vol%, and preferably 50 vol% to 70 vol%.

The thickness of the second sunlight-to-heat conversion layer 14 is not particularly limited, but is preferably 10 nm to 200 nm, and more preferably 30 nm to 100 nm.

The second sunlight-to-heat conversion layer 14 can be formed by using a silicide mentioned above and an inorganic material mentioned above as a target and carrying out sputtering in the presence of an inert gas such as argon gas. Sputtering conditions are not particularly limited and should be adjusted, as appropriate, according to the type of apparatus being used. In addition, it is possible to use separate targets of a silicide mentioned above and an inorganic material mentioned above or a single target that is a mixture of a silicide mentioned above and an inorganic material mentioned above. In addition, instead of an inorganic material target, a metal or metalloid that is a constituent element may be used as a target. In such a case, the second sunlight-to-heat conversion layer 14 may be formed by simultaneously sputtering a silicide mentioned above and a metal or metalloid mentioned above under conditions whereby oxygen gas or nitrogen gas is added to an inert gas such as argon gas and the metal or metalloid preferentially reacts with the oxygen gas or nitrogen gas.

As a specific example of Reference Embodiment 4, not part of the present invention, a layered product was produced by using SUS 310S as the ferrous material pipe 2 and layering thereupon a first diffusion-preventing layer 3 (a SiO₂ layer having a thickness of 100 nm), a second diffusion-preventing layer 4 (a TaN layer having a thickness of 100 nm), an infrared radiation-reflecting layer 5 in which 3 at% of Ta is dispersed (an Ag layer having a thickness of 250 nm), a metal protection layer 11 (a TaN layer having a thickness of 11 nm), an oxygen barrier layer 12 (a Si₃N₄ layer having a thickness of 12 nm), a first sunlight-to-heat conversion layer 13 (a β-FeSi₂ layer having a thickness of 15 nm), a second sunlight-to-heat conversion layer 14 (a β-FeSi₂+SiO₂ layer having a thickness of 60 nm; SiO₂ content 60 vol%) and an anti-reflection layer 8 (a SiO₂ layer having a thickness of 70 nm) in that order (see Fig. 6).

As another specific example of Reference Embodiment 4, not part of the present invention, a layered product was produced by using SUS 310S as the ferrous material pipe 2 and layering thereupon a first diffusion-preventing layer 3 (a SiO₂ layer having a thickness of 100 nm), a second diffusion-preventing layer 4 (a TaN layer having a thickness of 100 nm), an infrared radiation-reflecting layer 5 in which 3 at% of Ta is dispersed (an Ag layer having a thickness of 250 nm), a metal protection layer 11 (a TaN layer having a thickness of 11 nm), an oxygen barrier layer 12 (a Si₃N₄ layer having a thickness of 12 nm), a first sunlight-to-heat conversion layer 13 (a CrSi₂ layer having a thickness of 12 nm), a second sunlight-to-heat conversion layer 14 (a CrSi₂+SiO₂ layer having a thickness of 65 nm; SiO₂ content 60 vol%) and an anti-reflection layer 8 (a SiO₂ layer having a thickness of 90 nm) in that order (see Fig. 7).

According to the solar heat-collecting pipe 40 of this reference embodiment, not part of the present invention, which has characteristics such as those described above, it is possible to achieve not only the advantageous effects of the solar heat-collecting pipe 1 of Reference Embodiment 1, the solar heat-collecting pipe 10 of Reference Embodiment 2, the solar heat-collecting pipe 20 of Embodiment 1 and the solar heat-collecting pipe 30 of Reference Embodiment 3, but it is also possible to efficiently absorb sunlight in the sunlight-to-heat conversion layers and improve the function of the solar heat-collecting pipe.

### Embodiment 2

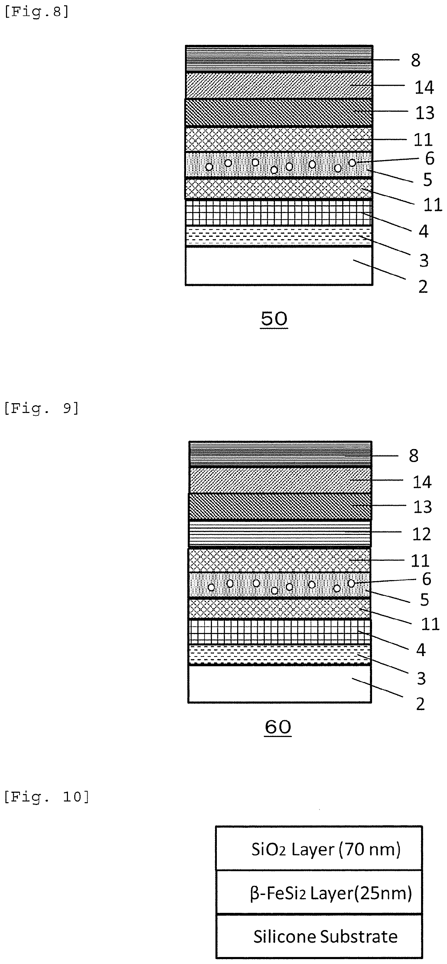

Fig. 8 is a partial cross-sectional view of the solar heat-collecting pipe of this embodiment.

In Fig. 8, a solar heat-collecting pipe 50 of this embodiment differs from the solar heat-collecting pipe 20 of Embodiment 1 in that the sunlight-to-heat conversion layer has a two-layer structure comprising a first sunlight-to-heat conversion layer 13 and a second sunlight-to-heat conversion layer 14. Moreover, because characteristics other than this are the same as those of the solar heat-collecting pipe 20 of Embodiment 1, explanations will be omitted.

By providing the second sunlight-to-heat conversion layer 14 between the anti-reflection layer 8 and the first sunlight-to-heat conversion layer 13, it is possible to reduce the difference in refractive index between the anti-reflection layer and the sunlight-to-heat conversion layers, and sunlight can be efficiently absorbed and converted to heat.

For example, because there is a large difference in refractive index between the sunlight-to-heat conversion layer and the anti-reflection layer in a case where a layer consisting of at least one silicide selected from the group consisting of iron silicide, manganese silicide and chromium silicide is used as the sunlight-to-heat conversion layer, by providing a layer consisting of a composite material containing such a silicide and an inorganic material between the anti-reflection layer and the sunlight-to-heat conversion layer, the difference in refractive index between these layers is reduced and sunlight can be efficiently absorbed.

Because characteristics of the first sunlight-to-heat conversion layer 13 and the second sunlight-to-heat conversion layer 14 in the solar heat-collecting pipe 50 are the same as those of the first sunlight-to-heat conversion layer 13 and the second sunlight-to-heat conversion layer 14 in the solar heat-collecting pipe 40 of Reference Embodiment 4, explanations relating to the solar heat-collecting pipe 40 can be used without being changed. That is, substances for forming the first sunlight-to-heat conversion layer 13 and the second sunlight-to-heat conversion layer 14 in the solar heat-collecting pipe 50, the thicknesses of these layers, and methods for forming these layers are the same as those for the solar heat-collecting pipe 40.

According to the solar heat-collecting pipe 50 of this embodiment, which has characteristics such as those described above, it is possible to achieve not only the advantageous effect of the solar heat-collecting pipe 20 of Embodiment 1, but it is also possible to efficiently absorb sunlight in the sunlight-to-heat conversion layers and improve the function of the solar heat-collecting pipe.

### Embodiment 3

Fig. 9 is a partial cross-sectional view of the solar heat-collecting pipe of this embodiment.

In Fig. 9, a solar heat-collecting pipe 60 of this embodiment differs from the solar heat-collecting pipe 40 of Reference Embodiment 4 in that a metal protection layer 11 is provided between the infrared radiation-reflecting layer 5 and the second diffusion-preventing layer 4, that is, the infrared radiation-reflecting layer 5 is sandwiched between metal protection layers 11. Moreover, because characteristics other than this are the same as those of the solar heat-collecting pipe 40 of Reference Embodiment 4, explanations will be omitted.

The metal protection layer 11 provided between the infrared radiation-reflecting layer 5 and the second diffusion-preventing layer 4 has the function of making Ag in the infrared radiation-reflecting layer 5 less likely to sublime, meaning that the function of the infrared radiation-reflecting layer 5 is less likely to deteriorate. In addition, the metal protection layer 11 provided between the infrared radiation-reflecting layer 5 and the second diffusion-preventing layer 4 also has the function of acting as a foundation for the infrared radiation-reflecting layer 5, makes the infrared radiation-reflecting layer 5 uniformly formed thereon, and can stabilize the function of the infrared radiation-reflecting layer 5.

Because the characteristics of the metal protection layer 11 provided between the infrared radiation-reflecting layer 5 and the second diffusion-preventing layer 4 in the solar heat-collecting pipe 60 are the same as those of the metal protection layer 11 provided between the infrared radiation-reflecting layer 5 and the second diffusion-preventing layer 4 in the solar heat-collecting pipe 20 of Embodiment 1, explanations relating to the solar heat-collecting pipe 20 can be used without being changed. That is, the substance for forming the metal protection layer 11 provided between the infrared radiation-reflecting layer 5 and the second diffusion-preventing layer 4 in the solar heat-collecting pipe 60, the thickness of this layer and the method for forming this layer are the same as those for the solar heat-collecting pipe 20.

According to the solar heat-collecting pipe 60 of this embodiment, which has characteristics such as those described above, it is possible to achieve not only the advantageous effects of the solar heat-collecting pipe 40 of Reference Embodiment 1, but it is also possible to more stably achieve the function of the infrared radiation-reflecting layer 5.

### Examples

### <Test Example 1>

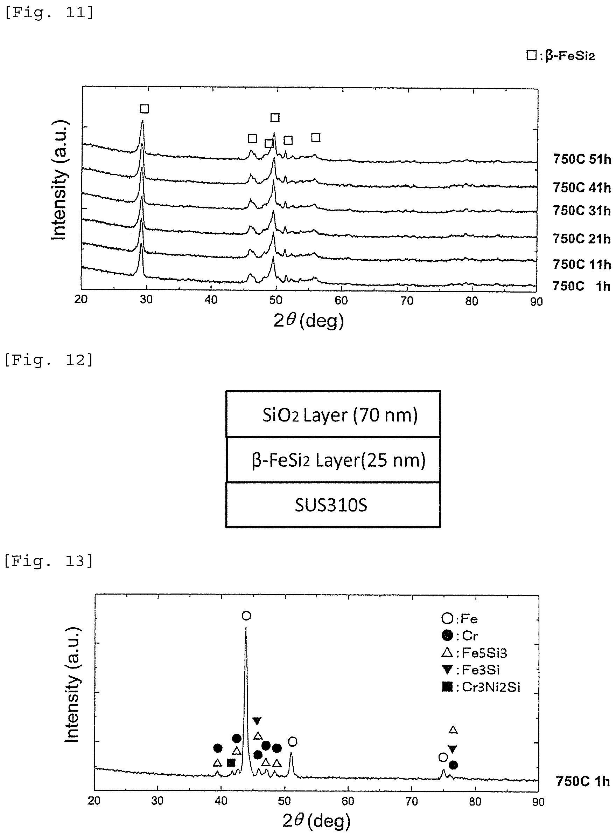

(i) A layered product of a β-FeSi₂ layer (25 nm) and a SiO₂ layer (70 nm) was produced on a silicon substrate using a sputtering method (see Fig. 10). The β-FeSi₂ layer was produced in the presence of argon gas using a β-FeSi₂ target. The SiO₂ layer was produced using a silicon target while reacting sputtered silicon with oxygen gas at an argon gas: oxygen gas molar ratio of 10:1.8.
(ii) This layered product was heated at 750°C for 1 hour, 11 hours, 21 hours, 31 hours, 41 hours, and 51 hours and then subjected to X-Ray diffraction using an X-Ray diffraction apparatus (Empyrean produced by PANalytical), and the constituent composition of the layered product was analyzed (see Fig. 11).
(iii) In view of the results shown in Fig. 11, no change in components in the layered product was observed in the chart even when the layered product was heated at 750°C for 51 hours.

As a result, even in cases where a silicon substrate is used as the pipe through which a heat transfer medium flows, the β-FeSi₂ layer is stable even under high temperature conditions.

### <Test Example 2>

(i) A layered product of a β-FeSi₂ layer (25 nm) and a SiO₂ layer (70 nm) was produced by means of a sputtering method using SUS 310S as a substrate (see Fig. 12). Production conditions are the same as those used in Test Example 1.
(ii) This layered product was heated at 750°C for 1 hour and then subjected to X-Ray diffraction using an X-Ray diffraction apparatus, and the constituent composition of the layered product was analyzed (see Fig. 13).
(iii) In view of the results shown in Fig. 13, it is understood that Fe₅Si₃, Fe₃Si, Cr₃Ni₂Si, and the like, were detected in this layered product, β-FeSi₂ reacted with components such as Fe, Cr, Ni, which had precipitated from the SUS 310S, and the composition of components in the β-FeSi₂ layer had changed. Therefore, it was understood that use of a ferrous material as a substrate had an adverse effect on the stability of the sunlight-to-heat conversion layer under high temperature conditions.

### <Test Example 3>

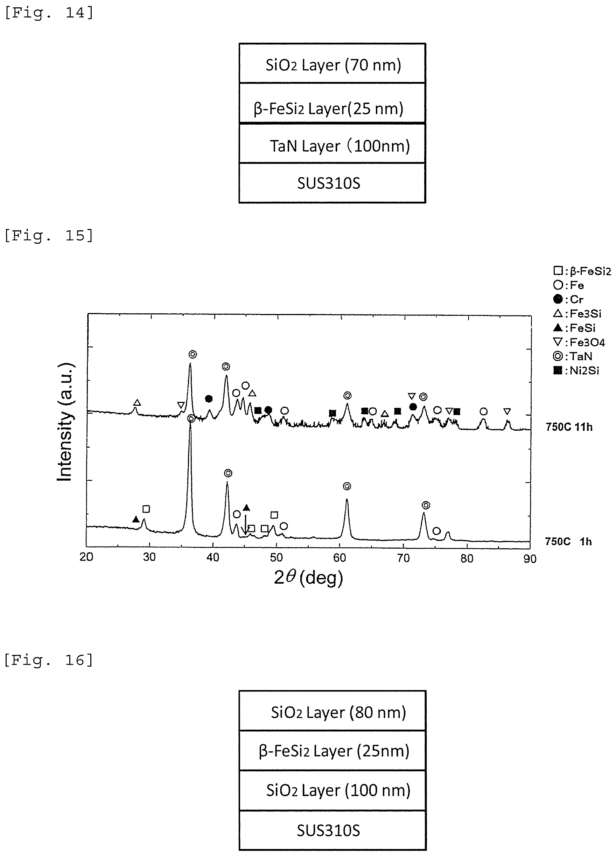

(i) A layered product of a TaN layer (100 nm), a β-FeSi₂ layer (25 nm) and a SiO₂ layer (70 nm) was produced by means of a sputtering method using SUS 310S as a substrate (see Fig. 14). The TaN layer was produced using a tantalum target while reacting sputtered tantalum with nitrogen gas under conditions whereby nitrogen gas was added to argon gas. The other layers are the same as those in Test Example 2.
(ii) This layered product was heated at 750°C for 1 hour and 11 hours and then subjected to X-Ray diffraction using an X-Ray diffraction apparatus, and the constituent composition of the layered product was analyzed (see Fig. 15).
(iii) In view of the results shown in Fig. 15, it is understood that Fe₃Si and Ni₂Si, and the like, were detected in this layered product when the layered product was heated at 750°C for 11 hours, β-FeSi₂ reacted with components such as Fe, Cr, Ni, which had precipitated from the SUS 310S, and the composition of components in the β-FeSi₂ layer had changed. Therefore, even if a TaN layer is provided as a diffusion-preventing layer, it is understood that the stability of the sunlight-to-heat conversion layer cannot be sufficiently ensured under high temperature conditions if a ferrous material is used as a substrate.

### <Test Example 4>

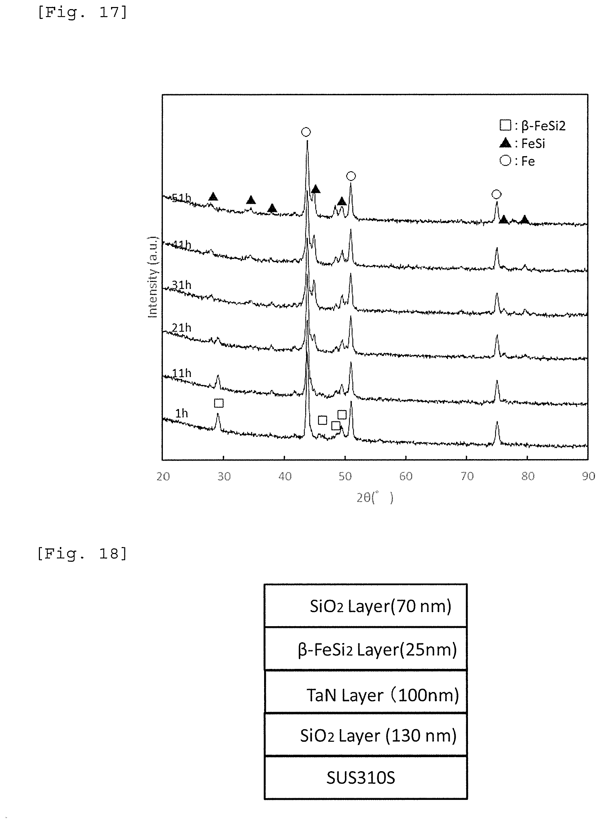

(i) A layered product of a SiO₂ layer (100 nm), a β-FeSi₂ layer (25 nm) and a SiO₂ layer (80 nm) was produced by means of a sputtering method using SUS 310S as a substrate (see Fig. 16). The methods for forming the layers were the same as those used in Test Example 1 (the two SiO₂ layers were formed using the same method).
(ii) This layered product was heated at 750°C for 1 hour, 11 hours, 21 hours, 31 hours, 41 hours, and 51 hours and then subjected to X-Ray diffraction using an X-Ray diffraction apparatus, and the constituent composition of the layered product was analyzed (see Fig. 15).
(iii) In view of the results shown in Fig. 17, it is understood that FeSi was detected in this layered product, β-FeSi₂ reacted with components which had precipitated from the SUS 310S, and the composition of components in the β-FeSi₂ layer had changed. Therefore, it is understood that the stability of the sunlight-to-heat conversion layer cannot be sufficiently ensured under high temperature conditions if only SiO₂ is provided as a diffusion-preventing layer.

### <Test Example 5>

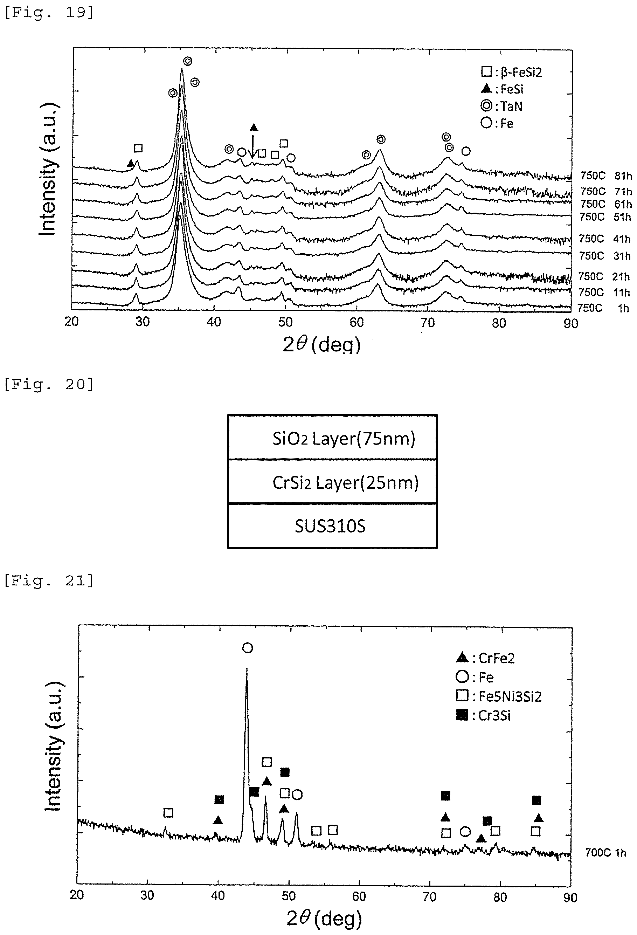

(i) A layered product of a SiO₂ layer (130 nm), a TaN layer (100 nm), a β-FeSi₂ layer (25 nm) and a SiO₂ layer (70 nm) was produced by means of a sputtering method using SUS 310S as a substrate (see Fig. 18). The methods for forming the layers were the same as those used in Test Example 3 (the two SiO₂ layers were formed using the same method).
(ii) This layered product was heated at 750°C for 1 hour, 11 hours, 21 hours, 31 hours, 41 hours, 51 hours, 61 hours, 71 hours, and 81 hours and then subjected to X-Ray diffraction using an X-Ray diffraction apparatus, and the constituent composition of the layered product was analyzed (see Fig. 19).
(iii) In view of the results shown in Fig. 19, almost no change in the shape of the chart was observed for different heating periods. That is, it is understood that the β-FeSi₂ layer is stable for a long time under high temperature conditions and that diffusion of components such as Fe, Cr, and Ni in the SUS 310S is suppressed. Therefore, it was understood that by providing the first diffusion-preventing layer and the second diffusion-preventing layer, it is possible to suppress thermal diffusion of components from a ferrous material.

### <Test Example 6>

(i) A layered product of a CrSi₂ layer (25 nm) and a SiO₂ layer (75 nm) was produced by means of a sputtering method using SUS 310S as a substrate (see Fig. 20). The CrSi₂ layer was produced in the presence of argon gas using a CrSi₂ target. The method for forming the SiO₂ layer is the same as that used in Test Example 1.
(ii) This layered product was heated at 700°C for 1 hour and then subjected to X-Ray diffraction using an X-Ray diffraction apparatus, and the constituent composition of the layered product was analyzed (see Fig. 21).
(iii) In view of the results shown in Fig. 21, it is understood that CrFe₂, Fe₅Ni₃Si₂, Cr₃Si₂, and the like, were detected in this layered product, CrSi₂ reacted with components such as Fe, Cr, Ni, which had precipitated from the SUS 310S, and the composition of components in the CrSi₂ layer had changed. Therefore, it was understood that use of a ferrous material had an adverse effect on the stability of the sunlight-to-heat conversion layer under high temperature conditions.

### <Test Example 7>

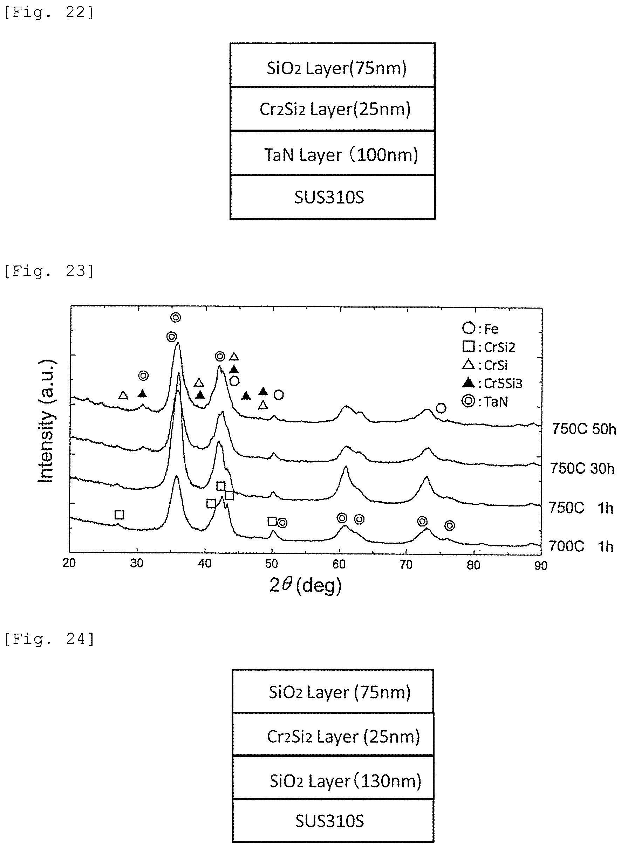

(i) A layered product of a TaN layer (100 nm), a CrSi₂ layer (25 nm) and a SiO₂ layer (75 nm) was produced by means of a sputtering method using SUS 310S as a substrate (see Fig. 22). The method for forming the TaN layer is the same as that used in Test Example 3. The other layers are the same as those in Test Example 6.
(ii) This layered product was heated at 700°C for 1 hour and at 750°C for 1 hour, 30 hours and 50 hours and then subjected to X-Ray diffraction using an X-Ray diffraction apparatus, and the constituent composition of the layered product was analyzed (see Fig. 23).
(iii) In view of the results shown in Fig. 23, it is understood that CrSi, Cr₅Si₃, and the like, were detected in this layered product when the layered product was heated at 750°C for a long time, CrSi₂ reacted with components such as Fe, Cr, Ni, which had precipitated from the SUS 310S, and the composition of components in the CrSi₂ layer had changed. Therefore, even if only a single TaN layer is provided as a diffusion-preventing layer, it is understood that the stability of the sunlight-to-heat conversion layer cannot be sufficiently ensured under high temperature conditions if a ferrous material is used.

### <Test Example 8>

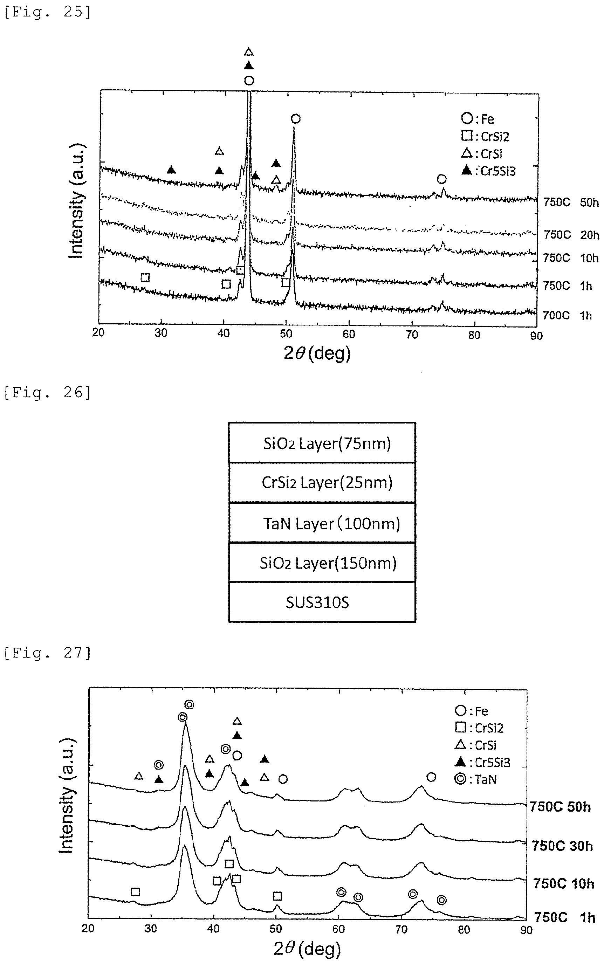

(i) A layered product of a SiO₂ layer (130 nm), a CrSi₂ layer (25 nm) and a SiO₂ layer (75 nm) was produced by means of a sputtering method using SUS 310S as a substrate (see Fig. 24). The methods for forming the layers were the same as those used in Test Example 6 (the two SiO₂ layers were formed using the same method).
(ii) This layered product was heated at 700°C for 1 hour and at 750°C for 1 hour, 10 hours, 20 hours and 50 hours and then subjected to X-Ray diffraction using an X-Ray diffraction apparatus, and the constituent composition of the layered product was analyzed (see Fig. 25).
(iii) In view of the results shown in Fig. 25, it is understood that CrSi and Cr₅Si₃ were detected in this layered product under high temperature conditions, CrSi₂ reacted with components which had precipitated from the SUS 310S, and the composition of components in the CrSi₂ layer had changed. Therefore, it is understood that the stability of the sunlight-to-heat conversion layer cannot be sufficiently ensured under high temperature conditions if only SiO₂ is provided as a diffusion-preventing layer.

### <Test Example 9>

(i) A layered product of a SiO₂ layer (150 nm), a TaN layer (100 nm), a CrSi₂ layer (25 nm) and a SiO₂ layer (75 nm) was produced by means of a sputtering method using SUS 310S as a substrate (see Fig. 26). The methods for forming the layers were the same as those used in Test Example 7 (the two SiO₂ layers were formed using the same method).
(ii) This layered product was heated at 750°C for 1 hour, 10 hours, 20 hours, 30 hours, 40 hours, and 50 hours and then subjected to X-Ray diffraction using an X-Ray diffraction apparatus, and the constituent composition of the layered product was analyzed (see Fig. 27).
(iii) In view of results in Fig. 27, almost no change in the shape of the chart was observed for different heating periods. That is, it is understood that the CrSi₂ layer was stable for a long time under high temperature conditions and that diffusion of components such as Fe, Cr, and Ni in the SUS 310S was suppressed. Therefore, it was understood that by providing the first diffusion-preventing layer and the second diffusion-preventing layer, it is possible to suppress thermal diffusion of components from a ferrous material.

### Example 1

Using SUS 310S as a substrate, a layered product was produced by layering a SiO₂ layer (having a thickness of 130 nm), a TaN layer (having a thickness of 100 nm), a TaSi₂ layer (having a thickness of 40 nm), an Ag layer containing Ta and Si (having a thickness of 200 nm and containing 7 at% of Ta and 3 at% of Si), a TaSi₂ layer (having a thickness of 15 nm), a SiO₂ layer (having a thickness of 10 nm), a β-FeSi₂ layer (having a thickness of 15 nm), a β-FeSi₂ layer containing SiO₂ (having a thickness of 60 nm and containing 60 vol% of SiO₂) and a SiO₂ layer (having a thickness of 65 nm) in that order using a sputtering method (see Fig. 28).

The Ag layer containing Ta and Si was produced by preparing an Ag target, a tantalum target and a silicon target and simultaneously sputtering in the presence of an argon gas at a DC power source output of 60W on the Ag side, a DC power source output of 2W on the tantalum side and an RF power source output of 80W on the silicon side. The TaSi₂ layer was produced by using a tantalum target and a silicon target, simultaneously sputtering in the presence of argon gas at a DC power source output of 23W on the tantalum side and an RF power source output of 200W on the silicon side, and reacting tantalum and silicon on the substrate. The β-FeSi₂ layer containing SiO₂ was produced by using β-FeSi₂ target and a silicon target and simultaneously sputtering at an argon gas: oxygen gas molar ratio of 10:1.8 at a DC power source output of 35W on the β-FeSi₂ side and an RF power source output of 200W on the silicon side, with silicon preferentially reacting with the oxygen gas. Methods for forming the other layers are the same as those in Test Example 3.

Example 1 is constituted from a SiO₂ layer as a first diffusion-preventing layer, a TaN layer as a second diffusion-preventing layer, a TaSi₂ layer as a metal protection layer provided between an infrared radiation-reflecting layer and a second anti-reflection layer, an Ag layer containing Ta and Si as the infrared radiation-reflecting layer, a TaSi₂ layer as a metal protection layer provided between the infrared radiation-reflecting layer and a sunlight-to-heat conversion layer, a SiO₂ layer as an oxygen barrier layer, a β-FeSi₂ layer as a first sunlight-to-heat conversion layer, a β-FeSi₂ layer containing SiO₂ as a second sunlight-to-heat conversion layer, and a SiO₂ layer as an anti-reflection layer from the substrate side.

### Comparative Example 1

Using SUS 310S as a substrate, a layered product was produced by layering a TaN layer (having a thickness of 100 nm), a TaSi₂ layer (having a thickness of 40 nm), an Ag layer containing Ta and S (having a thickness of 200 nm and containing 7 at% of Ta and 3 at% of Si), a TaSi₂ layer (having a thickness of 15 nm), a SiO₂ layer (having a thickness of 10 nm), a β-FeSi₂ layer (having a thickness of 15 nm), a β-FeSi₂ layer containing SiO₂ (having a thickness of 60 nm and containing 60 vol% of SiO₂) and a SiO₂ layer (having a thickness of 65 nm) in that order using a sputtering method (see Fig. 29). Methods for producing these layers are the same as in Example 1.

Comparative Example 1 differs from Example 1 by not containing the SiO₂ that is the first diffusion-preventing layer.

Samples of Example 1 were heated at 750°C for 1 hour, 21 hours, 41 hours, 61 hours, 81 hours, 101 hours, 121 hours, 141 hours, 161 hours, and 201 hours. Meanwhile, samples of Comparative Example 1 were heated at 750°C for 1 hour, 21 hours and 31 hours.

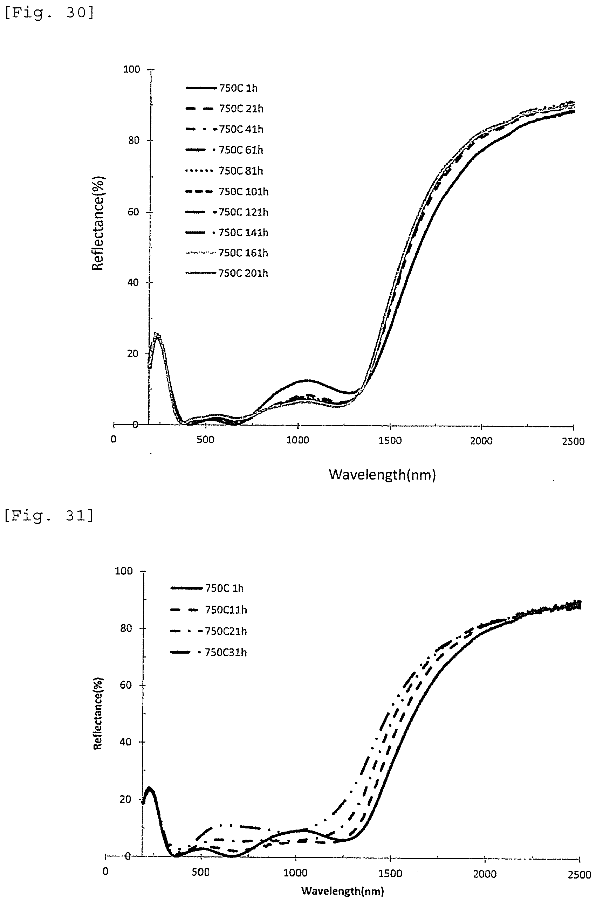

The reflectance values of the samples of Example 1 and Comparative Example 1, which had been heated under these conditions, were measured using a spectrophotometer (a Lambda 950 produced by PerkinElmer) at intervals of 5 nm within the wavelength range 190 nm to 2500 nm, with the reflectance of a white reflection board being taken to be 100%. The results are shown in Fig. 30 and Fig. 31.

From the results in Fig. 30, it can be understood that in Example 1, there is little change in reflection characteristics even when heating is carried out for a long period of time at a high temperature, and that high temperature stability is high. From the results in Fig. 31, however, it is understood that in Comparative Example 1, there were significant changes in reflection characteristics over time under high temperature conditions, and that high temperature stability is low.

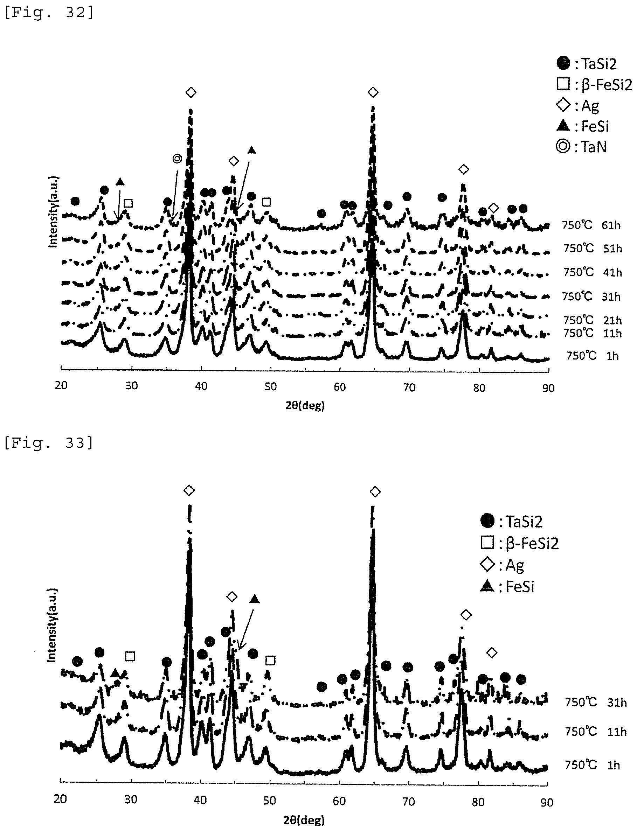

Furthermore, samples of Example 1 were heated at 750°C for 1 hour, 11 hours, 21 hours, 31 hours, 41 hours, 51 hours, and 61 hours. Meanwhile, samples of Comparative Example 1 were heated at 750°C for 1 hour, 11 hours and 31 hours. These samples of Example 1 and Comparative Example 1 were subjected to X-Ray diffraction. The results are shown in Fig. 32 and Fig. 33.

From the X-Ray diffraction chart in Fig. 33, a FeSi peak was observed in the case of Comparative Example 1, and it was confirmed that FeSi had been produced. In Fig. 32, however, no FeSi peak was observed even when heating was carried out for 201 hours in Example 1, which indicates long term stability at high temperatures.

From the experimental results in Test Examples 1 to 9, Example 1 and Comparative Example 1 above, it was verified that by providing the first diffusion-preventing layer and the second diffusion-preventing layer, thermal diffusion of components derived from a ferrous material such as stainless steel that constitutes the pipe of the solar heat-collecting pipe is prevented and a solar heat-collecting pipe having excellent high temperature stability can be obtained.

### Reference Signs List

1, 10, 20, 30, 40, 50, 60 Solar heat-collecting pipe
2 Pipe
3 First diffusion-preventing layer
4 Second diffusion-preventing layer
5 Infrared radiation-reflecting layer
6 Metal dispersed in infrared radiation-reflecting layer
7 Sunlight-to-heat conversion layer
8 Anti-reflection layer
11 Metal protection layer
12 Oxygen barrier layer
13 First sunlight-to-heat conversion layer
14 Second sunlight-to-heat conversion layer

## Claims

1. A solar heat-collecting pipe (1, 10, 20, 30, 40, 50, 60) comprising, in the stated order from the inner side on the outer surface of a ferrous material pipe (2) through the interior of which a heat transfer medium is allowed to flow, at least a first diffusion-preventing layer (3), a metal protection layer (11), an infrared radiation-reflecting layer (5), a sunlight-to-heat conversion layer (7), and an anti-reflection layer (8), wherein the first diffusion-preventing layer (3) includes at least one selected from the group consisting of silicon oxide, aluminum oxide and chromium oxide, **characterized in that**:
the solar heat-collecting pipe further comprises a second diffusion-preventing layer (4) between the first diffusion-preventing layer (3) and the metal protection layer (11), and **in that** the second diffusion-preventing layer (4) includes at least one selected from the group consisting of tantalum nitride, tantalum oxynitride, titanium nitride, titanium oxynitride, niobium nitride, and niobium oxynitride.

2. The solar heat-collecting pipe (1, 10, 20, 30, 40, 50, 60) according to claim 1, wherein the sunlight-to-heat conversion layer (7) comprises at least one silicide selected from the group consisting of iron silicide, manganese silicide and chromium silicide.

3. The solar heat-collecting pipe (1, 10, 20, 30, 40, 50, 60) according to claim 1 or claim 2, wherein the infrared radiation-reflecting layer (5) comprises 90 at% or more of Ag.

4. The solar heat-collecting pipe (10, 20, 30, 40, 50, 60) according to any one of claims 1 to 3, which further comprises a metal protection layer (11) between the infrared radiation-reflecting layer (5) and the sunlight-to-heat conversion layer (7).

5. The solar heat-collecting pipe (20, 50, 60) according to any one of claims 1 to 4, wherein the infrared radiation-reflecting layer (5) is sandwiched between two metal protection layers (11).

6. The solar heat-collecting pipe (10, 20, 30, 40, 50, 60) according to any one of claims 1 to 5, wherein the metal protection layer (11) comprises a material having a higher melting point than Ag.

7. The solar heat-collecting pipe (30, 40, 60) according to any one of claims 4 to 6, which further comprises an oxygen barrier layer (12) between the metal protection layer (11) and the sunlight-to-heat conversion layer (7).

8. The solar heat-collecting pipe (40, 50, 60) according to any one of claims 1 to 7, wherein
the sunlight-to-heat conversion layer is formed from a first sunlight-to-heat conversion layer (13) and a second sunlight-to-heat conversion layer (14) in that order from the inside,
the first sunlight-to-heat conversion layer (13) comprises at least 80 at% of one silicide selected from the group consisting of iron silicide, manganese silicide and chromium silicide, and
the second sunlight-to-heat conversion layer (14) consists of a composite material that includes at least one silicide selected from the group consisting of iron silicide, manganese silicide and chromium silicide; and at least one inorganic material.

## Patentansprüche

1. Solarwärme-Sammelrohr (1, 10, 20, 30, 40, 50, 60) umfassend, in der genannten Reihenfolge von der Innenseite an der Außenoberfläche eines eisenhaltigen Rohrs (2) aus, durch dessen Inneres ein Wärmetransfermedium fließen kann, zumindest eine erste diffusionshemmende Schicht (3), eine Metallschutzschicht (11), eine Infrarotstrahlung-Reflexionsschicht (5), eine Sonnenlicht-zu-Wärme-Konversionsschicht (7), und eine Antireflexionsschicht (8), wobei
die erste diffusionshemmende Schicht (3) zumindest eines ausgewählt aus der Gruppe bestehend aus Siliciumoxid, Aluminiumoxid und Chromoxid beinhaltet, **dadurch gekennzeichnet, dass**:
das Solarwärme-Sammelrohr ferner eine zweite diffusionshemmende Schicht (4) zwischen der ersten diffusionshemmenden Schicht (3) und der Metallschutzschicht (11) umfasst, und dadurch, dass
die zweite diffusionshemmende Schicht (4) zumindest eines ausgewählt aus der Gruppe bestehend aus Tantalnitrid, Tantaloxynitrid, Titannitrid, Titanoxynitrid, Niobnitrid, und Nioboxynitrid beinhaltet.

2. Solarwärme-Sammelrohr (1, 10, 20, 30, 40, 50, 60) gemäß Anspruch 1, wobei die Sonnenlicht-zu-Wärme-Konversionsschicht (7) zumindest ein Silicid ausgewählt aus der Gruppe bestehend aus Eisensilicid, Mangansilicid und Chromsilicid umfasst.

3. Solarwärme-Sammelrohr (1, 10, 20, 30, 40, 50, 60) gemäß Anspruch 1 oder Anspruch 2, wobei die Infrarotstrahlung-Reflexionsschicht (5) 90 at% oder mehr an Ag umfasst.

4. Solarwärme-Sammelrohr (10, 20, 30, 40, 50, 60) gemäß einem der Ansprüche 1 bis 3, das ferner eine Metallschutzschicht (11) zwischen der Infrarotstrahlung-Reflexionsschicht (5) und der Sonnenlicht-zu-Wärme-Konversionsschicht (7) umfasst.

5. Solarwärme-Sammelrohr (20, 50, 60) gemäß einem der Ansprüche 1 bis 4, wobei die Infrarotstrahlung-Reflexionsschicht (5) zwischen zwei Metallschutzschichten (11) eingezwängt ist.

6. Solarwärme-Sammelrohr (10, 20, 30, 40, 50, 60) gemäß einem der Ansprüche 1 bis 5, wobei die Metallschutzschicht (11) ein Material mit einem höheren Schmelzpunkt als Ag umfasst.

7. Solarwärme-Sammelrohr (30, 40, 60) gemäß einem der Ansprüche 4 bis 6, das ferner eine Sauerstoffbarriereschicht (12) zwischen der Metallschutzschicht (11) und der Sonnenlicht-zu-Wärme-Konversionsschicht (7) umfasst.

8. Solarwärme-Sammelrohr (40, 50, 60) gemäß einem der Ansprüche 1 bis 7, wobei
die Sonnenlicht-zu-Wärme-Konversionsschicht aus einer ersten Sonnenlicht-zu-Wärme-Konversionsschicht (13) und einer zweiten Sonnenlicht-zu-Wärme-Konversionsschicht (14) in dieser Reihenfolge von der Innenseite gebildet wird,
die erste Sonnenlicht-zu-Wärme-Konversionsschicht (13) zumindest 80 at% an einem Silicid ausgewählt aus der Gruppe bestehend aus Eisensilicid, Mangansilicid und Chromsilicid umfasst, und
die zweite Sonnenlicht-zu-Wärme-Konversionsschicht (14) aus einem Kompositmaterial besteht, das zumindest ein Silicid ausgewählt aus der Gruppe bestehend aus Eisensilicid, Mangansilicid und Chromsilicid; und zumindest ein anorganisches Material beinhaltet.

## Revendications

1. Tuyau de collecte de chaleur solaire (1, 10, 20, 30, 40, 50, 60) comprenant, dans l'ordre indiqué depuis le côté intérieur sur la surface extérieure d'un tuyau en matériau ferreux (2) à travers l'intérieur duquel un milieu de transfert de chaleur est laissé à circuler, au moins une première couche de prévention de diffusion (3), une couche de protection métallique (11), une couche réfléchissant les rayons infrarouges (5), une couche de conversion de lumière solaire en chaleur (7), et une couche antireflet (8),
dans lequel la première couche de prévention de diffusion (3) comprend au moins l'un choisi dans le groupe constitué par l'oxyde de silicium, l'oxyde d'aluminium et l'oxyde de chrome,
**caractérisé en ce que** :
le tuyau de collecte de chaleur solaire comprend en outre une deuxième couche de prévention de diffusion (4) entre la première couche de prévention de diffusion (3) et la couche de protection métallique (11), et **en ce que**
la deuxième couche de prévention de diffusion (4) comprend au moins l'un choisi dans le groupe constitué par le nitrure de tantale, l'oxynitrure de tantale, le nitrure de titane, l'oxynitrure de titane, le nitrure de niobium, et l'oxynitrure de niobium.

2. Tuyau de collecte de chaleur solaire (1, 10, 20, 30, 40, 50, 60) selon la revendication 1, dans lequel la couche de conversion de lumière solaire en chaleur (7) comprend au moins un siliciure choisi dans le groupe constitué par le siliciure de fer, le siliciure de manganèse et le siliciure de chrome.

3. Tuyau de collecte de chaleur solaire (1, 10, 20, 30, 40, 50, 60) selon la revendication 1 ou la revendication 2, dans lequel la couche réfléchissant les rayons infrarouges (5) comprend 90 % atomiques ou plus d'Ag.

4. Tuyau de collecte de chaleur solaire (10, 20, 30, 40, 50, 60) selon l'une quelconque des revendications 1 à 3, qui comprend en outre une couche de protection métallique (11) entre la couche réfléchissant les rayons infrarouges (5) et la couche de conversion de lumière solaire en chaleur (7).

5. Tuyau de collecte de chaleur solaire (20, 50, 60) selon l'une quelconque des revendications 1 à 4, dans lequel la couche réfléchissant les rayons infrarouges (5) est prise en sandwich entre deux couches de protection métalliques (11).

6. Tuyau de collecte de chaleur solaire (10, 20, 30, 40, 50, 60) selon l'une quelconque des revendications 1 à 5, dans laquelle la couche de protection métallique (11) comprend un matériau ayant un point de fusion supérieur à celui de l'Ag.

7. Tuyau de collecte de chaleur solaire (30, 40, 60) selon l'une quelconque des revendications 4 à 6, qui comprend en outre une couche de barrière à l'oxygène (12) entre la couche de protection métallique (11) et la couche de conversion de lumière solaire en chaleur (7).

8. Tuyau de collecte de chaleur solaire (40, 50, 60) selon l'une quelconque des revendications 1 à 7, dans lequel
la couche de conversion de lumière solaire en chaleur est formée à partir d'une première couche de conversion de lumière solaire en chaleur (13) et d'une deuxième couche de conversion de lumière solaire en chaleur (14) dans cet ordre depuis l'intérieur,
la première couche de conversion de lumière solaire en chaleur (13) comprend au moins 80 % atomiques d'au moins un siliciure choisi dans le groupe constitué par le siliciure de fer, le siliciure de manganèse et le siliciure de chrome, et
la deuxième couche de conversion de lumière solaire en chaleur (14) est constituée d'un matériau composite qui comprend au moins un siliciure choisi dans le groupe constitué par le siliciure de fer, le siliciure de manganèse et le siliciure de chrome ; et d'au moins un matériau inorganique.
